# EUROPEAN PATENT SPECIFICATION

(11) **EP 1 474 945 B1**
(45) Date of publication and mention of the grant of the patent: **08.12.2010**
(21) Application number: 03700814.1
(22) Date of filing: 28.01.2003
(51) Int. Cl.: H04W 48/20

(54) **CELL RE-SELECTION IN A CELLULAR RADIO SYSTEM**
ZELLENNEUAUSWAHL IN EINEM ZELLULARFUNKSYSTEM
RESELECTION DE CELLULES DANS UN SYSTEME RADIO CELLULAIRE

(30) Priority: 29.01.2002 FI 20020160
(43) Date of publication of application: 10.11.2004
(73) Proprietor: EADS Secure Networks Oy, 00380 Helsinki (FI)
(72) Inventor: LAAKSONEN, Pirkko, FIN-33340 Tampere (FI)
(74) Representative: Äkräs, Tapio Juhani
(86) International application number: PCT/FI2003/000063
(87) International publication number: WO 2003/065751

(56) References cited:
- WO-A1-93/05622
- WO-A1-94/14289
- WO-A2-01/47293

## Description

### Field of the Invention

The invention relates to cellular radio systems, and especially to cell re-selection in cellular radio systems.

### Background of the Invention

The most significant factor reducing the capacity of radio systems is the limited frequency spectrum available. The capacity of a radio system is thus dependent on how efficiently the radio frequencies allocated to the system can be utilized. In cellular radio networks, enhanced utilization of radio frequencies is based on frequency reuse: the same frequency is reused at several locations that are sufficiently spaced apart, which affords a vast increase in system capacity. This is counteracted by increased complexity in the network as well as in the mobile units that must be capable of selecting a base station from among several possible base stations. For example, if the same frequency is reused in every ninth cell, the spectral allocation of N frequencies permits the use of N/9 carriers simultaneously in any cell. With certain limitations the same frequency bands can be used in all cells simultaneously. There are various configurations of cellular networks, such as micro cellular networks, multi-layered networks, underlay-overlay networks, umbrella cells, etc.

In cellular mobile communication systems a radio terminal can move freely in the area of the cellular network and camp on the most suitable cell at each time. Cell re-selection (also called camping) is the act of changing the serving cell from an old cell to a new cell. When re-selection is made and possible registration is performed, the radio terminal is said to be attached to the cell. Cell re-selection during a call is also known as a handover. For that purpose, the cell site (the base station) of each cell broadcasts system information on the broadcast channel. The broadcast information includes information on the serving cell and information about neighbour cells, e.g. a neighbour cell list. The radio terminal measures the signal level/quality of the serving and neighbor cells. On the basis of the measurements, the radio terminal perform ranking of the neighbour cells according to suitable criteria and/or algorithm, so that selection of the best (most suitable) cell is attempted first.

Professional Mobile Radio or Private Mobile Radio (PMR) systems are dedicated radio systems developed primarily for professional and governmental users, such as the police, military forces, oil plants, etc. PMR services have been offered via dedicated PMR networks built with dedicated PMR technologies. This market is divided between several technologies - analog, digital, conventional and trunked - none of which has a dominating role. TETRA (Terrestrial Trunked Radio) is a standard defined by ETSI (European Telecommunications Standards Institute) for digital PMR systems.

One special feature offered by the PMR systems is group communication. Group communication is applicable to other kind of users too, such as firms or other groups using public cellular networks. The term "group", as used herein, refers to any logical group of three or more users intended to participate in the same group communication, e.g. call. The groups are created logically, i.e. special group communication information maintained on the network side associates specific user with a particular group communication group. This association can be readily created, modified or canceled. The same user may be a member in more than one group communication group. Typically, the members of the group communication group belong to the same organization, such as the police, the fire brigade, a private company, etc. Also, typically, the same organization has several separate groups, i.e. a set of groups.

In cellular systems using group communication, the operational area of a group is usually restricted to pre-defined geographical area. One reason is the system capacity; if group area covers the whole network, setting up a call to such a group uses a lot of system resources (traffic channels and speech lines between switches). Furthermore the communication need is usually only local, i.e. if you are located outside the normal operational area of the group, the need to participate in the communication vanishes.

The area of the group communication is usually defined to contain one or several base stations (radio network cells). To have better coverage and better service for the radio users, the radio network is usually defined such that the coverage areas of neighbour cells overlap. Thus several base stations may provide service for a radio terminal in a certain geographical area. When roaming near the border of the operational area of the group, the radio terminal can select such a cell from the several alternatives which is outside the group area.

EP 0 555 441 discloses an approach for overcoming this problem. The approach described in the patent is based on sending group call paging messages also in nearby cells not belonging to the group area directing the radio terminals to join the call on a traffic channel of a cell belonging to the group area. Thus, the radio terminal changes the cell only after receiving the group call paging message indicating call establishment in a nearby cell (belonging to the group area). This means that the radio terminal may have to register on the new cell (where the call is set up) and gain air interface encryption information from the system before being able to join the call. This may cause delay in being able to join the call.

WO 94/14289 A1 discloses a group call method in a cellular radio system in which a base station sends group call maintenance messages to mobile stations involved in the group call. The messages contain information concerning the base stations located within the group call area, and a a group call identity. On the basis of the information, the mobile station selects a base station within which the group call is in progress.

TETRA standard provides support for group communication only for the currently transmitting party (the talking party) who is performing announced type 2 or type 1 cell re-selection; the transmitting party informs the new cell to the system via the old cell before the cell change. The system can respond to this cell change request negatively indicating "restoration cannot be done on the cell". For the several receiving parties or for the case that no group call is going on, there is no cell change related group communication support defined in the TETRA standard.

### Summary of the Invention

An object of the invention is to provide a new way for a radio terminal to select a new cell when the radio terminal belongs to at least one communication group.

This object of the invention is achieved by a method, a radio system, and a radio terminal as disclosed in the attached independent claims 1, 9 and 18, respectively. Preferred embodiments of the invention are described in the dependent claims.

A cell site broadcasts neighbour cell broadcast messages containing information of all neighbour cells available to all radio terminals within a cell. In addition to this conventional broadcast, the cell site sends at least one further message indicating how the communication group or groups is or are available in the neighbour cells. Upon receiving this further information, a radio terminal belonging to at least one communication group makes a decision on selection of a new cell based on the availability of said at least one communication group if there are two or more candidates for the new cell. By the merits of the present invention, when performing cell re-selection the radio terminal knows, before selecting the other cell, whether the nominated cell supports the desired group(s) or not, and can thus select a cell where the desired group communication is possible.

The present invention provides various advantages in comparison with the prior art approaches. Firstly, the present invention provides solution also for receiving parties in a group call and also for a case in which there is no group call currently going on when the cell re-selection is performed. This is a significant improvement in comparison with the present TETRA standard.

Secondly, no information of the operational area of the groups needs to be pre-programmed to the radio terminals. This is an advantage over a hypothetical alternative approach to define "preferred cells" to the radio terminals reflecting the normal operational area of the terminal user, so that the radio terminal prefers these cells to other cells. Contrary to such a hypothetical approach, in the present invention the changing of the operational area of the groups does not cause re-programming the radio terminals. Further, the area definitions of the groups (listened to by the same radio terminal user) do not have to be identical.

Thirdly, advantages as compared with EP0555441 include that a radio terminal knows as early as before camping on the cell and without waiting for the next call establishment whether the group is available on the cell, i.e. whether the nominated cell belongs to the group area. The present invention decreases the number of cell selections and registrations as compared to EP055544. Further in EP055544, a radio terminal roaming while in a group call does not know which cell to select so that the call can be continued on the new cell. In the present invention, the radio terminal can be sure that the group is available within the whole coverage area of the cell.

Another alternative approach which could be employed instead of the present invention is making the decision to stay on the new cell after camping on the new cell. The radio terminal checks the availability of the group on the new cell by the "group attachment procedure" defined in the TETRA standard. If the response to this group attachment request is negative (group identity is not available within the current area), the radio terminal does not stay on the cell but tries to select another cell where the group is available. However, the present invention gains advantages as compared with this hypothetical approach. The radio terminal knows as early as before camping on the cell and without sending an attachment request whether the group is available on the cell, i.e. whether the nominated cell belongs to the group area. The present invention decreases the number of cell selections, registrations and uplink signalling. In addition, the "service break" (group not available) is minimised by the present invention.

### Brief Description of the Drawings

In the following, the invention will be described in greater detail by means of preferred embodiments with reference to the accompanying drawings, in which
Figure 1 illustrates an exemplary network architecture,
Figure 2 illustrates a cell configuration and group areas in a cellular network,
Figure 3 illustrates an example of SDS messages sent by the cell sites in Fig. 2, and
Figure 4 illustrates an example of neighbour cell broadcast messages sent by the cell sites in Fig. 2.

### Preferred Embodiments of the Invention

The present invention can be applied to any cellular mobile communication network supporting group communication.

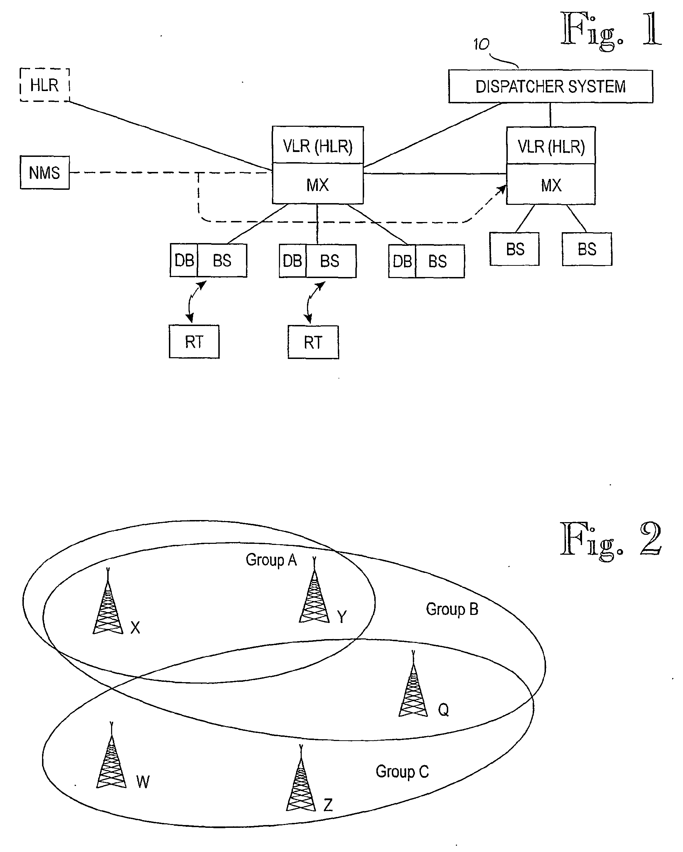

Fig. 1 illustrates an exemplary network architecture. The cellular network shown in this example comprises mobile exchange(s) MX, to which the base stations BS are connected via a suitable transmission system. A cellular network also comprises some kind of subscriber database system that may be distributed or centralized. Typically there are two types of logical database functions, a home location register (HLR) for permanent storage of data of the network's own subscribers and visitor location register (VLR) for storing the subscriber data temporarily while the subscriber is located in that VLR area. The VLR is often associated with or integrated into the mobile exchange MX, each MX having a dedicated VLR. The HLR may be associated with or integrated into the MX, each having a dedicated HLR. More typically, there is one HLR which is shared by two or more mobile exchanges MX. In professional systems there is typically also a dispatcher system(s) 10 for providing a variety of dispatching and management functions to the users. The dispatcher may lead, control and supervise the communication in the field as well as perform management functions, such as group management and subscriber management. For example, the group management can include group configuration, i.e. creation, modification, deletion of groups or temporary groups, and control of the group area. Also a network management system NMS may be able to perform the group management. When a group is created, the group information, such as a group identity which uniquely identifies the group in the network and the group area is stored in the system databases. If the group data, for example the group area, is later modified, the change is updated to the system databases. The members of the group may be defined when the group is created, or the information on the memberships may be achieved later on. This group membership information may also be stored to a system database, together with the group data, or to subscriber HLR/VLR. Now the dispatcher 10 or any of the radio terminals belonging to the group are able to initiate and receive a group call within the group area. An example of such a cellular system is the TETRA system defined by ETSI. The TETRA network is commercially available from Nokia Corporation.

The specific architecture of a cellular network employed is not relevant to the present invention, and the present invention is not intended to be restricted to any specific network configuration or architecture. For the basic invention it is only relevant that at least some of the cells of the network send, in addition to the conventional neighbour cell broadcast messages, at least one further message indicating how the communication group or groups is or are available in the neighbour cells. In the following, the preferred embodiments will be described.

According to a first aspect of the invention, the system, e.g. the cell site or the base station BS, sends data messages having a broadcast address and indicating the groups available by each neighbour cell. The information included into these data messages contains the cell identity of the neighbour cell and group identities of all the groups available on the new cell. In addition the normal neighbour cell broadcast messages having a broadcast address and indicating all the neighbour cells are also broadcasted. All radio terminals RT receive the information on all available neighbour cells (neighbour cell broadcast messages are sent with a broadcast address), and therefore, the radio terminals RT that do not support a cell re-selection algorithm according to the present invention are also supported by the network (backward compatibility). In other words, these radio terminals RT perform the cell re-selection in a conventional manner, e.g. as defined in the present TETRA standard. All radio terminals also receive the availability information of all groups in the data messages according to the invention. The radio terminals RT incompatible with the present invention ignore these additional messages. However, a radio terminal RT supporting the cell re-selection algorithm according to the invention makes the final decision based on the availability of the desired group(s) if there are several candidates for the new cell.

The additional data messages may be short data messages (SDS) defined in the TETRA standard, short messages (such as in the GSM), USSD messages, or any similar messaging messages.

The data messages containing the group availability information can be generated and/or sent by any suitable network entity. This network entity can be a base station or a mobile exchange, for example. Preferably this network entity is the same network entity that generates the normal neighbour cell broadcast messages, since this network entity has the neighbour cell information readily available. Further, when a new group is created, the group area information is stored in a memory or database of the network entity. If the group is modified, also the stored information is modified. If the group is deleted, the corresponding information in the network entity is deleted.

The information can be stored in a search table having a group identity as an index and listing the neighbour cell identifiers of each group. A sending routine in the network entity goes sequentially through the table and sends neighbour cell broadcast messages having a broadcast address and containing a group identity and a respective list of neighbour cell identifiers. One data message may contain information on one or several groups. It is also possible that similar messages having a group address and listing the neighbour cell IDs for the group are sent.

As another example, the information can be stored in a search table having a neighbour cell ID as an index and listing the identities of the groups available in the indexed neighbour cell. A sending routine in the network entity goes sequentially through the table and sends neighbour cell broadcast messages each having a broadcast address and containing a neighbour cell IDs and a list of group identities of the group available in that neighbour cell. One data message may contain information of one or several neighbour cells.

For example in the TETRA system, in addition to the normal neighbour cell D-NWRK BROADCAST messages, the system sends SDS messages containing the groups available by each neighbour cell in accordance with the present invention. The information included into these SDS messages contains the cell ID of the neighbour cell and group identities (GSSI/GTSI) of all the groups available on the new cell. These SDS messages are sent with broadcast address (all bits "ones"), and thus all radio terminals located on the cell will receive them. A short data message SDS with a User defined data 4 format defined in the TETRA standard can be used, and one of the protocol identifiers in the SDS messages can be reserved for the purpose *"group availability in neighbour cells".* The SDS message is received and processed as any SDS message by the conventional means in the radio terminal. On the basis of the new protocol identifier, a radio terminal is able to recognise that the received SDS message relates to the cell re-selection algorithm according to the invention, and forwards the information to the cell re-selection routine performing the cell re-selection algorithm. In an embodiment of the invention, this routine is implemented by means of a program run in a controller of the radio terminal.

The broadcast SDS message may contain the following information elements: cell identifier of the neighbour cell and a list of group identities/numbers (GSSIs/GTSIs) of the groups available in the cell corresponding to the cell identifier. One SDS message can contain information on one or several neighbour cells.

In another example, the SDS message may contain the following information elements: Group identity/number (GSSI/GTSI) and a list of cell identifiers of the neighbour cells in which the group corresponding to the group identity is available. One SDS message can contain information on one or several groups.

Let us illustrate the above embodiments by means of a practical example. In Figure 2, five cell sites or cells Q, X, Y, W and Z are shown. Also shown are group areas for groups A, B, and C. Cells X, Y, Z, W and Q are all each other's neighbours. Cells X and Y support groups A and B. Cells Z and W support group C. Cell Q supports groups B and C.

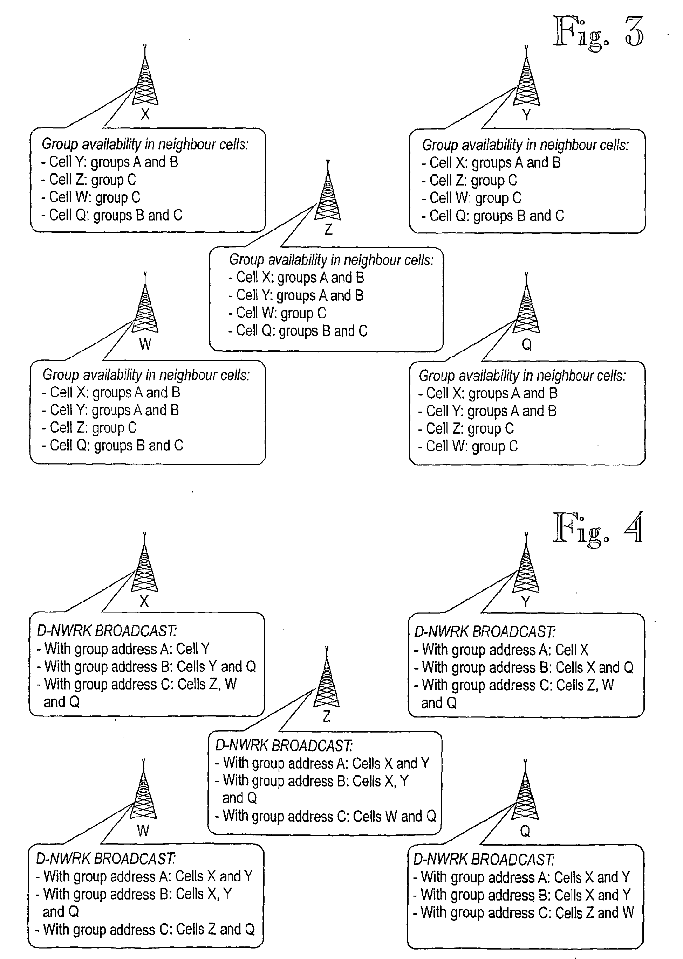

The contents of the SDS messages sent by the cell sites Q, X, Y, W and Z are shown in Figure 3 in accordance with one of the embodiments described above. For example, the cell site X will send SDS messages containing the following information:
Cell Y: groups A and B
Cell Z: group C
Cell W: group C
Cell Q: groups B and C

Alternatively, in accordance with the other embodiments described above, the cell site X will send SDS messages containing the following information:
Group A: Cell Y
Group B: Cells Y and Q
Group C: Cells Z, W and Q

The contents of the SDS messages sent by the other cell sites Q, Y, W and Z are arranged similarly.

According to a second aspect of the invention system, e.g. the cell site or the base station BS sends modified neighbour cell broadcast messages with a group address. Each group addressed broadcast message contains only those neighbour cells where the group is available (the cells in the message belong to a group area). The same neighbour cell may be included in several broadcast messages sent with different group address. In addition to these messages, conventional neighbour cell broadcast messages having a broadcast address and listing all the neighbour cells are also sent. All radio terminals RT receive the information of all available neighbour cells, and therefore, also the radio terminals that do not support a cell re-selection algorithm according to the present invention are supported by the cellular network (backward compatibility). Those radio terminals RT that are interested in a group (i.e. willing to receive communication addressed to the group) receive also the availability information on the group in the group addressed broadcast messages, in other words, information on neighbour cells belonging to the group area. If there are several candidates for the new cell, the radio terminal supporting the cell re-selection algorithm according to the present invention makes the final decision based on the availability of the desired group(s).

The modified neighbour cell broadcast messages having a group address can be generated by the same network entity which generates the normal neighbour cell broadcast messages. This network entity can be a base station or a mobile exchange, for example. For that purpose, when a new group is created, the group area information is stored in a memory or database of the network entity. If the group is modified, also the stored information is modified. If the group is deleted, the corresponding information in the network entity is deleted. The information can be stored in a search table having a group address as an index and listing the neighbour cell IDs of each group. A sending routine in the network entity goes sequentially through the table and sends sequentially neighbour cell broadcast messages, each having the indexed group address and the respective list of neighbour cell IDs. These modified neighbour cell broadcast messages can be sent interleaved with the normal neighbour cell broadcast messages, for example.

When this approach is applied in a TETRA system, a network broadcast message D-NWRK BROADCAST as defined in the TETRA standard may contain information on one or several neighbour cells. The D-NWRK BROADCAST message is sent via TMA-SAP containing an address field in the MAC header. In a normal case the address used in the MAC header is the broadcast address (all ones). According to the present invention, the system also sends D-NWRK BROADCAST messages with a group address, i.e. the address used in the MAC header is a GSSI (group short subscriber identity). Each group addressed D-NWRK BROADCAST message contains only those neighbour cells where the group is available (i.e. the cell belongs to a group area). Those radio terminals that are interested in receiving communication (voice and data) addressed to the group have the GSSI of the group attached (as valid layer 2 address) and thus are able to receive and identify also the group addressed broadcast messages. The information content of these messages is forwarded to a cell re-selection routine performing the cell re-selection algorithm according to the present invention. In an embodiment of the invention, this routine is implemented by means of a program run in a controller of the radio terminal.

The second approach is illustrated by means of a practical example referring again to the configuration shown in Figure 2. Cells X, Y, Z, W and Q are all each other's neighbours. Cells X and Y support groups A and B. Cells Z and W support group C. Cell Q supports groups B and C. The D-NWRK BROADCAST messages sent by different cell sites X, Y, Z, W and Q are shown in Fig. 4. More specifically, the system sends D-NWRK BROADCAST messages so that in a message addressed to group A, there are cells X and Y. In a D-NWRK BROADCAST message addressed to group B, there are cells X, Y and Q included. In a D-NWRK BROADCAST message addressed to group C, cells Z, W and Q are included. However, the current serving cell in which the message is sent is not included in the D-NWRK BROADCAST message. If a radio terminal RT1 has only group A attached, it will receive D-NWRK BROADCAST messages addressed to group A only. If a radio terminal RT2 has groups A and B attached, it will receive D-NWRK BROADCAST messages addressed to groups A and B. Let us assume that the radio terminals RT1 and RT2 are both currently located in cell X. The RT1 receives D-NWRK BROADCAST message telling that group A is supported in cell Y. The RT2 receives D-NWRK BROADCAST messages informing that group A is supported in cell Y and group B is supported in cells Y and Q.

The cell re-selection algorithm can be based on any suitable criteria employed in a specific radio system to which the present invention is applied to. For the purposes of the present invention, the selected cell re-selection algorithm is modified such that it takes into account the group availability information sent by the radio system in accordance with the present invention. Details of such modification depend on the requirements of each specific implementation.

One suitable cell re-selection algorithm is based on measurements of signal power received from serving and neighbour cells and path loss parameters calculated on the basis of these measurements. Such algorithm is used in the TETRA system and defined in the TETRA standard. Let us consider the general aspects of such an algorithm. When a radio terminal is synchronised to a cell, it directly measures the received power of that cell and directly obtains the broadcast and synchronisation information for that cell by decoding the Broadcast Network CHannel BNCH and Broadcast Synchronization CHannel BSCH. In that way, the radio terminal obtains a C1 path loss parameter for a neighbour cell. The radio terminal also calculates another path loss parameter C2 of neighbour cells, using information about the neighbour cells broadcast by the serving cell. The path loss measurements, C1 and C2, can be used to maintain a ranked list of neighbour cells. The ranking algorithm will rank the monitored neighbour cells in strict order of downlink radio connection quality. The results of this algorithm can be used to determine when a cell is deemed to be radio usable, radio relinquishable or radio improvable. For example, a cell may be required to meet the following minimum criteria in order to be included in the ranking list of neighbour cells: C1 > 0 or C2 > 0. If these criteria are not satisfied, a radio terminal does not include that cell in the ranking list and so does not consider that cell for cell re-selection. Alternatively, the ranking may be based on C1 or C2 only in certain situations. Also other broadcast information, such as the supported services for the neighbour cells, can be used in the ranking and cell re-selection. Finally, the radio terminal chooses the cell which has the highest ranking. It should be appreciated that this is only one example of re-selection algorithms. Any other suitable algorithm can be used instead.

The present invention improves any such conventional algorithm in that the broadcast group availability information provides additional information for the radio terminal selecting the new cell: the radio terminal knows before the cell selection attempt which groups are supported on each of the neighbour cells. Thus, the radio terminal can rank higher than normally those neighbour cells that support the desired group(s) so that one of them is most likely or exclusively selected, if otherwise satisfactory.

For example, a radio terminal may rank higher those cells that support one of the following groups: 1) group where there is an ongoing call; or 2) group that is currently actively used (so-called selected group); or 3) all of the attached groups of the radio terminal; or 4) most of the attached groups of the radio terminal; or 5) most of the important groups attached in the radio terminal.

The invention can be used also if the network is planned so that there is double coverage. For example, if one "umbrella cell" covers the areas of several normal/small size cells, load of the umbrella cell can be decreased by means of directing the group communication of desired groups to the other cells. This is achieved so that the broadcast messages of the other cells do not indicate that the groups are available via the umbrella cell. So the radio terminals that are interested in the group communication tend to favour the normal/small size cells.

## Claims

1. A cell selection method in a cellular radio system, comprising
a cell site broadcasting neighbour cell broadcast messages containing information on all neighbour cells available to all radio terminals within a cell, **characterized in that** the method further comprises
the cell site sending at least one further message indicating which communication group or groups is or are available in each specific neighbour cell,
a radio terminal belonging to at least one communication group making a decision on the selection of a new cell on the basis of the availability of said at least one communication group if there are two or more candidates for the new cell,
wherein said step of sending said at least one further message comprises
the cell site sending with a broadcast address said at least one further message containing a cell identity of at least one neighbour cell and a list of communication groups available in said at least one neighbour cell.

2. A method according to claim 1, **characterized in that** each said at least one further message contains a dedicated communication group list for one or more of said neighbour cells.

3. A method according to claim 1, **characterized in that** said step of sending said at least one further message comprises
the cell site sending with a broadcast address said at least one further message containing a group identity of at least one communication group and a list of the neighbour cells in which said at least one communication group is available.

4. A method according to claim 3, **characterized in that** each said at least one further message contains a dedicated neighbour cell list for one or more communication group.

5. A method according to claim 1, **characterized in that** said step of sending at least one further message comprises
the cell site sending with a group address to each communication group a separate message containing a list of the neighbour cells in which the respective communication group is available.

6. A method according to any one of claims 1-5, **characterized in that** said at least one further message comprises a short message, a short data message or any corresponding messaging message.

7. A method according to claim 1 or 5, **characterized in that** said at least one further message comprises a structure of said neighbour cell broadcast messages modified to contain a group address and a list of the neighbour cells in which the respective communication group is available, in the place of the broadcast address and all neighbour cells, respectively.

8. A cellular radio system, comprising
a cell site (BTS;Q,Y,W,X,Y,Z) configured to broadcast neighbour cell broadcast messages containing information on all neighbour cells available to all radio terminals within a cell, **characterized in that** the system further comprises
the cell site (BTS;Q,Y,W,X,Y,Z) being further configured to send at least one further message indicating which communication group or groups (A,B,C) is or are available in each specific one of said neighbour cells,
a radio terminal (RT) belonging to at least one communication group and configured to, responsive to there being two or more candidates for the new cell, make a decision on the selection of a new cell, based on the availability of said at least one communication group (A,B,C),
wherein said at least one further message is provided with a broadcast address and contains a cell identity of a neighbour cell and a list of communication groups (A,B,C) available in said neighbour cell.

9. A system according to claim 8, **characterized in that** each said at least one further message contains a cell identity and a dedicated communication group list for two or more of said neighbour cells.

10. A system according to claim 8, **characterized in that** said at least one further message is provided with a broadcast address and contains a group identity of a communication group (A,B,C) and a list of the neighbour cells in which said communication group is available.

11. A system according to claim 10, **characterized in that** each said at least one further message contains a dedicated neighbour cell list for one or more communication group (A,B,C).

12. A system according to claim 8, **characterized in that** the cell site is configured to send to each communication group a separate message with a group address and containing a list of the neighbour cells in which the respective communication group (A,B,C) is available.

13. A system according to any one of claims 8-12, **characterized in that** said at least one further message comprises a short message, a short data message or any corresponding messaging message.

14. A system according to claim 8 or 13, **characterized in that** said at least one further message comprises a structure of said neighbour cell broadcast messages modified to contain a group address and a list of the neighbour cells in which the respective communication group (A,B,C) is available, in the place of the broadcast address and a list all neighbour cells, respectively.

15. A system according to any one of claims 8 to 14, **characterized in that** one of the neighbour cells is an overlaying larger cell having at least partially overlapping coverage, and that said at least one further message does not indicate that any or some of the groups are available via the umbrella cell.

16. A radio terminal for a cellular radio system, wherein said radio terminal (RT) belongs to at least one communication group (A,B,C) and comprises
first means for receiving neighbour cell broadcast messages from a serving cell site (BTS;Q,Y,W,X,Y,Z), said messages containing information on all neighbour cells available to all radio terminals within a serving cell, **characterized in that** the radio terminal further comprises
second means for receiving at least one further message indicating which communication group or groups (A,B,C) is or are available in each specific neighbour cell,
third means responsive to having two or more candidates for the new cell for selecting a new cell, based on the availability of said at least one communication group (A,B,C),
wherein said at least one further message received is provided with a broadcast address and contains a cell identity of at least one neighbour cell and a list of communication groups (A,B,C) available in said at least one neighbour cell.

17. A radio terminal according to claim 16, **characterized in that** said at least one further message received is provided with a broadcast address and contains a group identity of at least one communication group and a list of the neighbour cells in which said at least one communication group (A,B,C) is available.

18. A radio terminal according to claim 16, **characterized in that** said at least one further message received is provided with a group address and contains a list of the neighbour cells in which the respective communication group (A,B,C) is available.

19. A radio terminal according to any one of claims 16-18, **characterized in that** said at least one further message received comprises a short message, a short data message or any corresponding messaging message, and that said second means comprise means for receiving a short message, a short data message or any corresponding messaging message.

20. A radio terminal according to claim 16 or 18, **characterized in that** said at least one further message received comprises a structure of said neighbour cell broadcast messages modified to contain a group address and a list of the neighbour cells in which the respective communication group (A,B,C) is available, in the place of the broadcast address and all neighbour cells, respectively, and that said first means are configured to implement said second means.

21. A radio terminal according to any one of claims 16 to 20, **characterized in that** said third means are configured to rank all neighbour cells as candidates for the new cell according to predetermined criteria so that the availability of the desired group or groups (A,B,C) in a neighbour cell improves the rank of the cell.

## Patentansprüche

1. Verfahren zur Zellenauswahl in einem zellulären Funksystem, wobei:
ein Zellenstandort Nachbarzelle-Rundsendenachrichten rundsendet, die Information über alle Nachbarzellen enthalten, die für alle Funkgeräte innerhalb einer Zelle verfügbar sind, **dadurch gekennzeichnet, dass** beim Verfahren weiterhin
der Zellenstandort zumindest eine weitere Nachricht sendet, die anzeigt, welche Kommunikationsgruppe oder -gruppen in jeder spezifischen Nachbarzelle verfügbar ist/sind,
ein Funkgerät, das zu zumindest einer Kommunikationsgruppe gehört, eine Entscheidung über die Auswahl einer neuen Zelle aufgrund der Verfügbarkeit der besagten zumindest einen Kommunikationsgruppe trifft, falls es zwei oder mehr Kandidaten für die neue Zelle gibt,
wobei im besagten Schritt der Sendung der besagten zumindest einen weiteren Nachricht:
der Zellenstandort die besagte zumindest eine weitere Nachricht mit einer Rundsendeadresse sendet, welche Nachricht eine Zellenidentität zumindest einer Nachbarzelle und eine Liste von in der besagten zumindest einen Nachbarzelle verfügbaren Kommunikationsgruppen enthält.

2. Verfahren nach Anspruch 1, **dadurch gekennzeichnet, dass** jede besagte zumindest eine weitere Nachricht eine dedizierte Kommunikationsgruppenlist für eine oder mehr der besagten Nachbarzellen enthält.

3. Verfahren nach Anspruch 1, **dadurch gekennzeichnet, dass** im besagten Schritt der Sendung der besagten zumindest einen weiteren Nachricht:
der Zellenstandort die besagte zumindest eine weitere Nachricht mit einer Rundsendeadresse sendet, welche Nachricht eine Gruppenidentität zumindest einer Kommunikationsgruppe und eine Liste der Nachbarzellen enthält, in denen zumindest eine Kommunikationsgruppe verfügbar ist.

4. Verfahren nach Anspruch 3, **dadurch gekennzeichnet, dass** jede besagte zumindest eine weitere Nachricht eine dedizierte Nachbarzellenlist für eine oder mehr Kommunikationsgruppen enthält.

5. Verfahren nach Anspruch 1, **dadurch gekennzeichnet, dass** im besagten Schritt der Sendung zumindest einer weiteren Nachricht:
der Zellenstandort jeder Kommunikationsgruppe eine separate Nachricht mit einer Gruppenadresse sendet, welche Nachricht eine Liste der Nachbarzellen enthält, in denen die entsprechende Kommunikationsgruppe verfügbar ist.

6. Verfahren nach einem der Ansprüche 1 bis 5, **dadurch gekennzeichnet, dass** die besagte zumindest eine weitere Nachricht eine Kurzmitteilung, eine Kurzdatenmeldung oder eine beliebige entsprechende Mitteilungsnachricht aufweist.

7. Verfahren nach Anspruch 1 oder 5, **dadurch gekennzeichnet, dass** die besagte zumindest eine weitere Nachricht eine Struktur der besagten Nachbarzelle-Rundsendenachrichten aufweist, die modifiziert ist, um eine Gruppenadresse und eine Liste der Nachbarzellen, in denen die entsprechende Kommunikationsgruppe verfügbar ist, anstatt der Rundsendeadresse und entsprechend aller Nachbarzellen zu enthalten.

8. Zelluläres Funksystem mit
einem Zellenstandort (BTS;Q,Y,W,X,Y,Z), der konfiguriert ist, Nachbarzelle-Rundsendenachrichten rundzusenden, die Information über alle Nachbarzellen enthalten, die für alle Funkgeräte innerhalb einer Zelle verfügbar sind, **dadurch gekennzeichnet, dass** das System weiterhin aufweist:
den Zellenstandort (BTS;Q,Y,W,X,Y,Z), der weiterhin konfiguriert ist, zumindest eine weitere Nachricht zu senden, die anzeigt, welche Kommunikationsgruppe oder -gruppen (A, B, C) in jeder spezifischen der besagten Nachbarzellen verfügbar ist/sind,
ein Funkgerät (RT), das zu zumindest einer Kommunikationsgruppe gehört und konfiguriert ist, eine Entscheidung über die Auswahl einer neuen Zelle aufgrund der Verfügbarkeit der besagten zumindest einen Kommunikationsgruppe (A,B,C), als Antwort auf Vorhandensein von zwei oder mehr Kandidaten für die neue Zelle, zu treffen.
wobei die besagte zumindest eine weitere Nachricht mit einer Rundsendeadresse versehen ist und eine Zellenidentität einer Nachbarzelle und eine Liste von in der besagten Nachbarzelle verfügbaren Kommunikationsgruppen (A,B,C) enthält.

9. System nach Anspruch 8, **dadurch gekennzeichnet, dass** jede besagte zumindest eine weitere Nachricht eine Zellenidentität und eine dedizierte Kommunikationsgruppenlist für zwei oder mehr der besagten Nachbarzellen enthält.

10. System nach Anspruch 8, **dadurch gekennzeichnet, dass** die besagte zumindest eine weitere Nachricht mit einer Rundsendeadresse versehen ist und eine Gruppenidentität einer Kommunikationsgruppe (A,B,C) und eine Liste der Nachbarzellen enthält, in denen die besagte Kommunikationsgruppe verfügbar ist.

11. System nach Anspruch 10, **dadurch gekennzeichnet, dass** jede besagte zumindest eine weitere Nachricht eine dedizierte Nachbarzellenlist für eine oder mehr Kommunikationsgruppen (A,B,C) enthält.

12. System nach Anspruch 8, **dadurch gekennzeichnet, dass** der Zellenstandort konfiguriert ist, jeder Kommunikationsgruppe eine separate Nachricht zu senden, die mit einer Gruppenadresse versehen ist und eine Liste der Nachbarzellen enthält, in denen die entsprechende Kommunikationsgruppe (A,B,C) verfügbar ist.

13. System nach einem der Ansprüche 8 bis 12, **dadurch gekennzeichnet, dass** die besagte zumindest eine weitere Nachricht eine Kurzmitteilung, eine Kurzdatenmeldung oder eine beliebige entsprechende Mitteilungsnachricht aufweist.

14. System nach Anspruch 8 oder 13, **dadurch gekennzeichnet, dass** die besagte zumindest eine weitere Nachricht eine Struktur der besagten Nachbarzelle-Rundsendenachrichten aufweist, die modifiziert ist, um eine Gruppenadresse und eine Liste der Nachbarzellen, in denen die entsprechende Kommunikationsgruppe (A,B,C) verfügbar ist, anstatt der Rundsendeadresse und entsprechend aller Nachbarzellen zu enthalten.

15. System nach einem der Ansprüche 8 bis 14, **dadurch gekennzeichnet, dass** eine der Nachbarzellen eine überlagernde größere Zelle mit einem zumindest teilweise überlappenden Versorgungsbereich ist und dass die besagte zumindest eine weitere Nachricht nicht anzeigt, dass eine oder einige der Gruppen über die Schirmzelle verfügbar ist/sind.

16. Funkgerät für ein zelluläres Funksystem, worin das besagte Funkgerät (RT) zu zumindest einer Kommunikationsgruppe (A,B,C) gehört und aufweist:
erste Mittel zum Empfangen von Nachbarzelle-Rundsendenachrichten von einem versorgenden Zellenstandort (BTS;Q,Y,W,X,Y,Z), welche Nachrichten Information über alle Nachbarzellen enthalten, die für alle Funkgeräte innerhalb einer versorgenden Zelle verfügbar sind, **dadurch gekennzeichnet, dass** das Funkgerät weiterhin aufweist:
zweite Mittel zum Empfangen zumindest einer weiteren Nachricht, die anzeigt, welche Kommunikationsgruppe oder -gruppen (A,B,C) in jeder spezifischen Nachbarzelle verfügbar ist/sind,
dritte Mittel zum Auswählen einer neuen Zelle aufgrund der Verfügbarkeit der besagten zumindest einen Kommunikationsgruppe (A,B,C) als Antwort auf Vorhandensein von zwei oder mehr Kandidaten für die neue Zelle,
wobei die empfangene besagte zumindest eine weitere Nachricht mit einer Rundsendeadresse versehen ist und eine Zellenidentität zumindest einer Nachbarzelle und eine Liste von in der besagten zumindest einen Nachbarzelle verfügbaren Kommunikationsgruppen (A,B,C) enthält.

17. Funkgerät nach Anspruch 16, **dadurch gekennzeichnet, dass** die empfangene, besagte zumindest eine weitere Nachricht mit einer Rundsendeadresse versehen ist und eine Gruppenidentität zumindest einer Kommunikationsgruppe und eine Liste der Nachbarzellen enthält, in denen die besagte zumindest eine Kommunikationsgruppe (A,B,C) verfügbar ist.

18. Funkgerät nach Anspruch 16, **dadurch gekennzeichnet, dass** die empfangene, besagte zumindest eine weitere Nachricht mit einer Gruppenadresse versehen ist und eine Liste der Nachbarzellen enthält, in denen die entsprechende Kommunikationsgruppe (A,B,C) verfügbar ist.

19. Funkgerät nach einem der Ansprüche 16 bis 18, **dadurch gekennzeichnet, dass** die empfangene, besagte zumindest eine weitere Nachricht eine Kurzmitteilung, eine Kurzdatenmeldung oder eine beliebige entsprechende Mitteilungsnachricht aufweist und dass die besagten zweiten Mittel Mittel zum Empfangen einer Kurzmitteilung, einer Kurzdatenmeldung oder einer beliebigen entsprechenden Mitteilungsnachricht aufweisen.

20. Funkgerät nach Anspruch 16 oder 18, **dadurch gekennzeichnet, dass** die empfangene, besagte zumindest eine weitere Nachricht eine Struktur der besagten Nachbarzelle-Rundsendenachrichten aufweist, die modifiziert ist, um eine Gruppenadresse und eine Liste der Nachbarzellen, in denen die entsprechende Kommunikationsgruppe (A,B,C) verfügbar ist, anstatt der Rundsendeadresse und entsprechend aller Nachbarzellen zu enthalten, und dass die besagten ersten Mittel konfiguriert sind, die besagten zweiten Mittel auszuführen.

21. Funkgerät nach einem der Ansprüche 16 bis 20, **dadurch gekennzeichnet, dass** die besagten dritten Mittel konfiguriert sind, alle Nachbarzellen als Kandidaten für die neue Zelle gemäß vorbestimmten Kriterien zu klassifizieren, so dass die Verfügbarkeit der erwünschten Gruppe oder Gruppen (A,B,C) in einer Nachbarzelle den Rang der Zelle verbessert.

## Revendications

1. Procédé de sélection de cellule dans un système radio cellulaire, comprenant un site cellulaire diffusant généralement des messages de cellules adjacentes à diffusion générale contenant des informations sur toutes les cellules adjacentes à la disposition de tous les terminaux radio se trouvant dans une cellule ;
**caractérisé en ce que** le procédé comprend les étapes consistant à :
émettre par le site cellulaire au moins un nouveau message indiquant quels sont le ou les groupes de communication disponibles dans chaque cellule adjacente spécifique ;
prendre une décision, par un terminal radio appartenant à au moins un groupe de communication, de sélectionner une nouvelle cellule en fonction de la disponibilité dudit au moins un groupe de communication, s'il existe deux candidates ou plus pouvant être choisies comme nouvelle cellule ;
dans lequel ladite étape d'émission dudit au moins un nouveau message comprend l'étape consistant à :
émettre par le site cellulaire, avec une adresse de diffusion générale, ledit au moins un nouveau message contenant une identité de cellule d'au moins une cellule adjacente et une liste de groupes de communication disponibles dans ladite au moins une cellule adjacente.

2. Procédé selon la revendication 1, **caractérisé en ce que** ledit au moins un nouveau message contient une liste spécialisée de groupes de communication pour une ou plusieurs desdites cellules adjacentes.

3. Procédé selon la revendication 1, **caractérisé en ce que** ladite étape d'émission dudit au moins un nouveau message comprend l'étape consistant à :
émettre par le site cellulaire, avec une adresse de diffusion générale, ledit au moins un nouveau message contenant une identité de groupe d'au moins un groupe de communication et une liste des cellules adjacentes dans lesquelles ledit groupe de communication est disponible.

4. Procédé selon la revendication 3, **caractérisé en ce que** ledit au moins un nouveau message contient une liste spécialisée de cellules adjacentes pour un ou plusieurs groupes de communication.

5. Procédé selon la revendication 1, **caractérisé en ce que** ladite étape d'émission dudit au moins un nouveau message comprend l'étape consistant à :
émettre par le site cellulaire vers chaque groupe de communication, avec une adresse de groupe, un message distinct contenant une liste des cellules adjacentes dans lesquelles le groupe de communication respectif est disponible.

6. Procédé selon l'une quelconque des revendications 1 à 5, **caractérisé en ce que** ledit au moins un nouveau message consiste en un message court, un message court de données ou n'importe quel message de messagerie correspondant.

7. Procédé selon la revendication 1 ou 5, **caractérisé en ce que** ledit au moins un nouveau message comprend une structure desdits messages de cellules adjacentes à diffusion générale, modifiée pour contenir une adresse de groupe et une liste des cellules adjacentes dans lesquelles le groupe de communication respectif est disponible, à la place de l'adresse de diffusion générale et de toutes les cellules adjacentes, respectivement.

8. Système radio cellulaire, comprenant :
un site cellulaire (BTS ; Q, Y, W, X, Y, Z) configuré pour diffuser généralement des messages de cellules adjacentes à diffusion générale, contenant des informations sur toutes les cellules adjacentes à la disposition de tous les terminaux radio se trouvant dans une cellule ;
**caractérisé en ce que** le système comprend en outre :
le site cellulaire (BTS ; Q, Y, W, X, Y, Z) configuré en outre pour émettre au moins un nouveau message indiquant quels sont le ou les groupes de communication (A, B, C) disponibles dans chacune des cellules adjacentes spécifiques ;
un terminal radio (RT) appartenant à au moins un groupe de communication et configuré, s'il existe deux candidates ou plus pouvant être choisies comme nouvelle cellule, pour prendre une décision de sélectionner une nouvelle cellule en fonction de la disponibilité dudit au moins un groupe de communication (A, B, C) ;
dans lequel ledit au moins un nouveau message est doté d'une adresse de diffusion générale et contient une identité de cellule d'une cellule adjacente et une liste de groupes de communication (A, B , C) disponibles dans ladite cellule adjacente.

9. Système selon la revendication 8, **caractérisé en ce que** ledit au moins un nouveau message contient une identité de cellule et une liste spécialisée de groupes de communication pour deux desdites cellules adjacentes ou plus.

10. Système selon la revendication 8, **caractérisé en ce que** ledit au moins un nouveau message est doté d'une adresse de diffusion générale et contient une identité de groupe d'un groupe de communication (A, B, C) et une liste des cellules adjacentes dans lesquelles ledit groupe de communication est disponible.

11. Système selon la revendication 10, **caractérisé en ce que** ledit au moins un nouveau message contient une liste spécialisée de cellules adjacentes pour un ou plusieurs groupes de communication (A, B, C).

12. Système selon la revendication 8, **caractérisé en ce que** le site cellulaire est configuré pour envoyer à chaque groupe de communication un message distinct doté d'une adresse de groupe et contenant une liste des cellules adjacentes dans lesquelles le groupe de communication respectif (A, B, C) est disponible.

13. Système selon l'une quelconque des revendications 8 à 12, **caractérisé en ce que** ledit au moins un nouveau message consiste en un message court, un message court de données ou n'importe quel message de messagerie correspondant.

14. Système selon la revendication 8 ou 13, **caractérisé en ce que** ledit au moins un nouveau message comprend une structure desdits messages de cellules adjacentes à diffusion générale, modifiée pour contenir une adresse de groupe et une liste des cellules adjacentes dans lesquelles le groupe de communication respectif (A, B, C) est disponible, à la place de l'adresse de diffusion générale et de toutes les cellules adjacentes, respectivement.

15. Système selon l'une quelconque des revendications 8 à 14, **caractérisé en ce que** l'une des cellules adjacentes est une cellule plus grande avec chevauchement, offrant au moins un chevauchement de la couverture et **en ce que** ledit au moins un nouveau message n'indique pas si un ou plusieurs des groupes sont disponibles dans la cellule parapluie.

16. Terminal radio pour un système radio cellulaire, dans lequel ledit terminal radio (RT) appartient à au moins un groupe de communication (A, B, C) et comprend :
un premier moyen destiné à recevoir des messages de cellules adjacentes à diffusion générale en provenance d'un site cellulaire de desserte (BTS ; Q, Y, W, X, Y, Z), lesdits messages contenant des informations sur toutes les cellules adjacentes à la disposition de tous les terminaux radio se trouvant dans une cellule de desserte ;
**caractérisé en ce que** le terminal radio comprend en outre :
un deuxième moyen destiné à recevoir au moins un nouveau message indiquant quels sont le ou les groupes de communication (A, B, C) disponibles dans chacune des cellules adjacentes spécifiques ;
un troisième moyen qui, s'il existe deux candidates ou plus pouvant être choisies comme nouvelle cellule, sélectionne une nouvelle cellule en fonction de la disponibilité dudit au moins un groupe de communication (A, B, C) ;
dans lequel ledit au moins un nouveau message reçu est doté d'une adresse de diffusion générale et contient une identité de cellule d'au moins une cellule adjacente et une liste de groupes de communication (A, B , C) disponibles dans ladite au moins une cellule adjacente.

17. Terminal radio selon la revendication 16, **caractérisé en ce que** ledit au moins un nouveau message reçu est doté d'une adresse de diffusion générale et contient une identité de groupe d'un groupe de communication (A, B, C) et une liste des cellules adjacentes dans lesquelles ledit groupe de communication (A, B, C) est disponible.

18. Terminal radio selon la revendication 16, **caractérisé en ce que** ledit au moins un nouveau message reçu est doté d'une adresse de groupe et contient une liste des cellules adjacentes dans lesquelles le groupe de communication respectif (A, B, C) est disponible.

19. Terminal radio selon l'une quelconque des revendications 16 à 18, **caractérisé en ce que** ledit au moins un nouveau message reçu consiste en un message court, un message court de données ou n'importe quel message de messagerie correspondant et **en ce que** ledit deuxième moyen comprend un moyen destiné à recevoir un message court, un message court de données ou n'importe quel message de messagerie correspondant.

20. Terminal radio selon la revendication 16 ou 18, **caractérisé en ce que** ledit au moins un nouveau message comprend une structure desdits messages de cellules adjacentes à diffusion générale, modifiée pour contenir une adresse de groupe et une liste des cellules adjacentes dans lesquelles le groupe de communication respectif (A, B, C) est disponible, à la place de l'adresse de diffusion générale et de toutes les cellules adjacentes, respectivement, et **en ce que** ledit premier moyen est configuré pour réaliser ledit deuxième moyen.

21. Terminal radio selon l'une quelconque des revendications 16 à 20, **caractérisé en ce que** ledit troisième moyen est configuré pour classer toutes les cellules adjacentes comme candidates pouvant être choisies comme nouvelle cellule, en fonction de critères prédéterminés, la disponibilité du ou des groupes voulus (A, B, C) dans une cellule adjacente améliorant le classement de la cellule.
